(19) Europäisches Patentamt
European Patent Office
Office européen des brevets

(11) **EP 0 642 472 B1**

(12) **EUROPEAN PATENT SPECIFICATION**

(45) Date of publication and mention
of the grant of the patent:
**27.01.1999 Bulletin 1999/04**

(21) Application number: **93913632.1**

(22) Date of filing: **26.05.1993**

(51) Int. Cl.[6]: **C02F 3/28**, B01D 53/00

(86) International application number:
**PCT/NL93/00107**

(87) International publication number:
**WO 93/24416 (09.12.1993 Gazette 1993/29)**

(54) **PROCESS FOR REMOVING SULPHUR COMPOUNDS FROM WATER**

VERFAHREN FÜR DIE BESEITIGUNG VON SCHWEFELVERBINDUNGEN AUS WASSER

PROCEDE PERMETTANT D'ELIMINER DES COMPOSES SOUFRES PRESENTS DANS L'EAU

(84) Designated Contracting States:
**AT BE CH DE ES FR GB GR IT LI NL**

(30) Priority: **26.05.1992 NL 9200927**

(43) Date of publication of application:
**15.03.1995 Bulletin 1995/11**

(73) Proprietor: **Paques B.V.**
**NL-8560 AB Balk (NL)**

(72) Inventor:
**BUISMAN, Cees, Jan, Nico**
**NL-8571 RH Harich (NL)**

(74) Representative:
**de Bruijn, Leendert C. et al**
**Nederlandsch Octrooibureau**
**P.O. Box 29720**
**2502 LS Den Haag (NL)**

(56) References cited:
**EP-A- 0 436 254**        **EP-A- 0 445 043**
**EP-A- 0 451 922**        **FR-A- 2 548 213**

• **DATABASE WPI Week 8411, Derwent Publications Ltd., London, GB; AN 84-064950**
• **GWF WASSER ABWASSER vol. 132, no. 4, April 1991, MUNCHEN DE pages 197 - 207 HANS-CURT FLEMMING 'BIOFILME UND WASSERTECHNOLOGIE, TEIL I' ZIE BLADZIJDE 202, LINKER KOLOM, 4.1. DICKE**
• **WATER SA vol. 12, no. 3, July 1986, PRETORIA, SOUTH AFRICA pages 139 - 144 J.P. MAREE ET AL. 'A BIOLOGICAL PROCESS FOR SULPHATE REMOVAL FROM INDUSTRIAL EFFLUENTS'**
• **PATENT ABSTRACTS OF JAPAN vol. 9, no. 184 (C-294)(1907) 30 July 1985**
• **PATENT ABSTRACTS OF JAPAN vol. 11, no. 394 (C-465)(2841) 23 December 1987**

**Description**

The invention relates to a process for removing sulphur compounds from water.

The presence of sulphur compounds in water is usually an unacceptable factor. In the case of sulphate, sulphite and thiosulphate, the principal drawbacks are attack on the sewer, eutrophication and silting. In addition, heavy metals, which are particularly undesired because of their toxic properties, are frequently also present in water containing a large amount of sulphur compounds. One type of effluent in which sulphur compounds, in particular sulphite, are a constituent which is difficult to remove is the wash water from flue gas treatment plants. The flue gases from power stations and waste incinerators cause extensive pollution of the environment due to the presence of acidifying sulphur dioxide ($SO_2$). The harmful effects of acidification on forests, water, buildings etc. are generally known. Other types of effluents containing sulphur compounds are those originating from the printing industry, mining industry, and paper, rubber, leather and viscose industry.

In broad terms two types of method are available for the removal of sulphur-containing compounds, that is to say physicochemical methods and biological methods.

The physicochemical treatment methods include precipitation, ion exchange and membrane filtration (electrodialysis and reverse osmosis). Disadvantages of such methods are tie high costs and the large stream of waste which results. In the case of flue gas treatment, absorption on lime or ammonia is usually employed. In this case large amounts of gypsum or ammonium sulphate are formed, which may be partly re-used. However, particularly in the case of gypsum the possible applications are becoming ever fewer because the quality demands for gypsum are becoming ever more stringent and the market for gypsum is becoming saturated.

In the case of a biological treatment, sulphate and sulphite and other sulphur compounds are reduced in an anaerobic step to give sulphide, which in turn can be oxidised to elementary sulphur. Such processes are known, for example from International patent application WO 91/16269 and European patent application 451922. JP-A-59-19595 discloses an anaerobic treatment of dithionate-containing effluent wherein a BOD source and a halomethane are added and generated $H_2S$ is removed because this otherwise would inhibit anaerobic degradation of thionate.

The advantage of such a method is that only small waste streams remain because the sulphur formed can be reused. However, the disadvantage is that, especially when the effluent contains little organic matter, electron donors have to be added in order to provide sufficient reduction equivalents for the sulphate reducing bacteria (SRB). The most important electron donors are methanol, ethanol, glucose and other saccharides, organic acids, such as acetic, propionic, butyric and lactic acid, hydrogen and carbon monoxide. The use of these electron donors has the effect of substantially increasing the cost of this method of removal of sulphur from waste streams.

Organic compounds having two or more carbon atoms are found to decompose under anaerobic conditions to give hydrogen and acetate. The hydrogen can be used as an electron donor for the reduction of sulphate and sulphite and the like, but, under normal conditions, about 50% of the acetate is converted to methane by methane producing bacteria (MPB). Under normal anaerobic conditions, methanol is converted to methane for about 90%. In this case, methane formation has the disadvantages that additional electron donor has to be added (increasing the costs) and that a gas stream contaminated with $H_2S$ is formed which has to be washed and burnt off in the flare.

A number of measures have been found which, separately or in combination, result in a considerable reduction in the consumption of electron donor during the anaerobic treatment of sulphur compounds in waste water which contains low levels of organic matter, because little or no methane is produced.

The measures of the process according to the invention are:

a1): keeping the sulphate concentration in the anaerobic effluent at at least 500 mg/l;
a2): keeping the sulphite concentration in the anaerobic effluent at at least 100 mg/l;
b): keeping the salt concentration, expressed in sodium ion equivalents, in the anaerobic medium at at least 6 g/l under mesophilic conditions, or at least 3 g/l under thermophilic conditions;
c): keeping the sulphide concentration in the anaerobic influent at at least 100 mg/l.

For reducing sulphur compounds to sulphide an electron donor is necessary, as follows from the reaction equations given below for sulphate, sulphite and thiosulphate.

$$SO_4^{2-} + 5\,H_2O + 8\,e \rightarrow HS^- + 9\,HO^-$$

$$SO_3^{2-} + 4\,H_2O + 6\,e \rightarrow HS^- + 7\,HO^-$$

$$S_2O_3^{2-} + 5\,H_2O + 8\,e \rightarrow 2\,HS^- + 8\,HO^-$$

In case water containing little or no organic matter has to be treated, such an electron donor should be added.

2

Depending on the applied process, the following electron donors may e.g. be used: hydrogen, carbon monoxide and organic compounds such as fatty acids, alcohols, sugars, starches and organic waste. Preferably, methanol, ethanol, glucose, polysaccharides such as sucrose, starch or cellulose, or a carboxylic acid (fatty acid) is used. The following reaction equations show the electron donating function for ethanol by way of example.

$$C_2H_5OH + 12\ OH^- \rightarrow \rightarrow CO_2 + 9\ H_2O + 12\ e \qquad\qquad \text{(c-SRB)}$$

$$C_2H_5OH + 4\ OH^- \rightarrow \rightarrow CH_3CO_2^- + 3\ H_2O + 4\ e \qquad\qquad \text{(i-SRB)}$$

If necessary, nutrient elements are also added in the form of nitrogen, phosphate and trace elements.

Using the method according to the invention, the efficiency of the electron donors is substantially improved.

Measure a) can relate to the sulphate concentration (a1). The minimum sulphate concentration according to the invention is the concentration in the effluent of the anaerobic reactor. For a mixed reactor this is also the concentration in the reactor itself (the anaerobic medium). The minimum sulphate concentration in the anaerobic effluent is especially applicable to waste waters which contain relatively low amounts of organic compounds, i.e. to which organic compounds (electron donors) have to be added. These low amounts of organic compounds can be expressed as a chemical oxygen demand (COD) of less than about 2 g, preferably less than 1.5 g $O_2$ per g of sulphate. It can also be expressed as a dissolved organic carbon content of less than about 600 mg C per g of sulphate. The minimum sulphate concentration applies especially under equilibrium conditions and/or under conditions where the major part, i.e. more than 50% or even more than 75%, of the incoming sulphate is reduced to sulphide.

Since sulphite and thiosulphate can be converted to sulphate by disproportionation under the reaction conditions, an equivalent concentration of sulphite or thiosulphate can also be used. The reaction equations for disproportionation of sulphite and thiosulphate are the following:

$$4\ SO_3^{2-} + H^+ \rightarrow 3\ SO_4^{2-} + HS^-$$

$$S_2O_3^{2-} + OH^- \rightarrow SO_4^{2-} + HS^-$$

From these equations a conversion factor of 4/3 * 80/96 = 1.11 for sulphate $\rightarrow$ sulphite and a conversion factor of 1 * 112/96 = 1.16 for sulphate $\rightarrow$ thiosulphate follow. Thus a sulphate concentration of 500 mg/l corresponds to a sulphite concentration of 550 mg/l and to a thiosulphate concentration of 580 mg/l. It has been found however, that a sulphite level which is lower than the corresponding sulphate concentration is already effective in promoting reduction to sulphide. Thus the minimum sulphite concentration in the process of the invention is 100 mg/l.

Preferably, the sulphate concentration in the anaerobic effluent is kept at at least 900 mg/l. The upper limit of the sulphate concentration is primarily situated at the upper limit of the salt concentration (see b), which is in the order of 50 g/l for sodium sulphate. Furthermore, no more than 3 g of sulphate per l should preferably be converted to sulphide in the anaerobic reactor, since a higher sulphide concentration is toxic for the SRB. If no limiting conditions (such as a limitation of electron donor or nutrients) exist in the anaerobic reactor, the sulphate concentration of the reactor influent should therefore not be higher than 3 g/l. In case of thiosulphate the same concentrations as for sulphate can be used.

For sulphite (a2) the concentration is preferably at least 300, more preferably at least 400 mg/l mg per l of the anaerobic effluent. The upper limit for sulphite is determined by the toxicity limit of sulphite itself. Preferably, the sulphite concentration does not exceed 2 g/l.

The sulphate (sulphite, thiosulphate) concentration can be controlled in various ways. In recycling systems, wherein a large proportion of the purified water is recirculated, such as in flue gas desulphurisation, the sulphate (sulphite) concentration can be controlled by adjustment of the reaction conditions. In this way, the sulphate concentration in water having a high sulphate (or sulphite) load, for example > 7 g/l, wherein a large part of the water is recycled and a small part is drained off, can be controlled by adjusting the added amount of electron donor or by limiting the concentration of nutrients, such as phosphate. In water treatment systems where there is hardly any recycling of water and the drain is almost as large as the feed, for example in the treatment of water having low sulphate concentrations, such as 1-7 g/l, the sulphate-reducing system can be set up in two stages, the sulphate concentration being kept at the value mentioned above in the first stage and being further reduced in the second stage.

The bacteria which can be used for the anaerobic step of the method according to the invention, the reduction of sulphur compounds to sulphide, are in particular sulphur- and sulphate-reducing bacteria (SRB), such as those of the genera *Desulfovibrio, Desulfotomaculum, Desulfomonas, Desulfobulbus, Desulfobacter, Desulfococcus, Desulfonema, Desulfosarcina, Desulfobacterium* and *Desulforomas.*

The SRB can be classified according to their metabolism. The completely oxidising sulphate-reducing bacteria (c-SRB) are capable of oxidising their organic substrate to $CO_2$, whereas the incompletely oxidising sulphate-reducing bacteria (i-SRB) oxidise the organic substrate to acetate, which cannot be oxidised further. The i-SRB grow considerably faster (about 5 times) than the c-SRB. Suitable sulphate-reducing bacteria are generally available from diverse anaerobic cultures and/or grow spontaneously in the reactor.

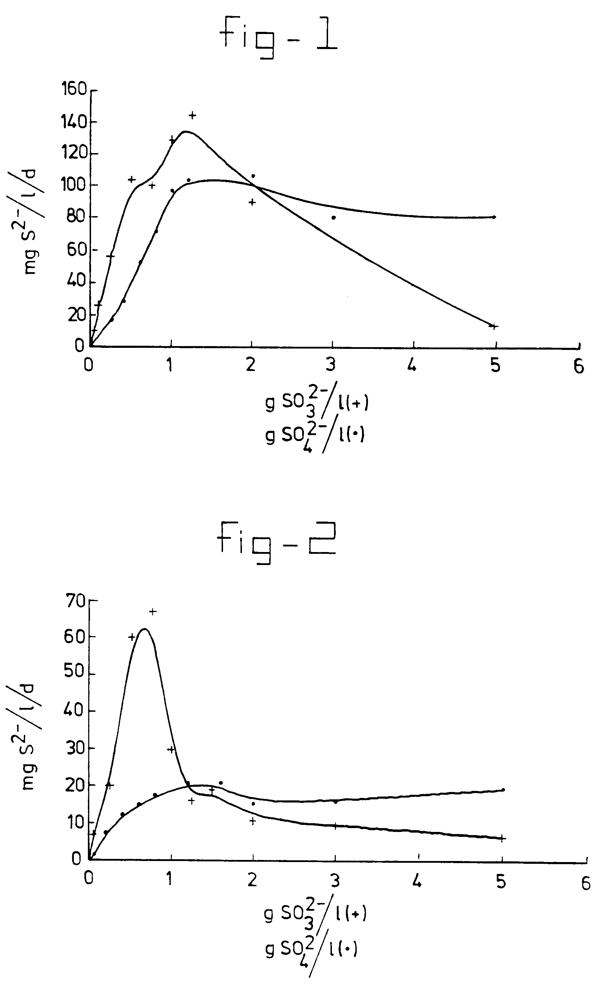

The optimum sulphate and sulphite concentrations as mentioned above differ somewhat for these types of SRB. For i-SRB, the sulphate concentration is preferably between 0.5 and 3 g/l, and particularly between 1 and 2 g/l, whereas the sulphite concentration is preferably between 0.5 and 2 g/l, in particular between 0.9 and 1.5 g/l (Fig. 1). For c-SRB the sulphate concentration is preferably between 0.4 and 5 g/l, and particularly between 1 and 2 g/l, whereas the sulphite concentration is preferably between 0.3 and 1.5 g/l, in particular between 0.4 and 1 g/l (Fig. 2). The accompanying figures 1 and 2 show the sulphide forming activity in mg per l of medium per day of the i-SRB and c-SRB respectively, as a function of the sulphate (.) and sulphite (+) concentration.

The salt concentration according to measure (b) is preferably kept at about 6 g $Na^+$/l or higher, under mesophilic conditions, i.e. at moderate temperatures of e.g. 20-40°C. Under these conditions, the salt concentration is preferably at least 7 g/l. more preferably between 10 and 25 g Na/l and in particular between 12 and 14 g Na/l. Under thermophilic conditions, i.e. at temperatures above 40°C, especially above 45°C, which temperatures may be used in flue gas desulphurisation, the salt concentration may be lower in order to obtain a similar favourable effect on electron donor consumption. When an electron donor having two or more carbon atoms, such as ethanol, is used under thermophilic conditions, the preferred sodium concentration is at least 3 g/l, more particularly 4 to 8 g/l. For one-carbon electron donors such as methanol, the optimum thermophilic salt concentration is different and is preferably between 6 and 14 g Na/l.

For salts having other cations than sodium, corresponding concentrations apply. For example for potassium at least about 10 g/l, preferably at least 12 g/l is used. Instead of the salt concentration, the conductivity can be used as a parameter: under mesophilic conditions, this is at least about 24 mS/cm, and does not exceed 90 mS/cm; the conductivity is particularly situated between 24 and 48 mS/cm. Under thermophilic these values are correspondingly lower: from 12 to 56 mS/cm.

It was found that a minimum sulphide concentration in the anaerobic influent of about 100 mg/l results in a relative benefit for the SRB. The minimum sulphide concentration according to measure (c) can for example be achieved by adding sulphide to the reactor influent during the start-up of the anaerobic reactor, and partly recycling the reactor effluent so as to maintain the concentration of sulphide at the desired level. The sulphide concentration is preferably at least 100, more preferably at least 150 mg/l, most preferably at least 200 mg/l, whereas sulphide concentrations above 500 mg/l do not generally lead to further improvements.

As a preferred additional measure, a biofilm thickness of the anaerobic bacteria of less than 0.5 mm is maintained. This can be achieved for example by applying a strong turbulence in the medium, for example by gas injection. The thickness can also be controlled through the choice of the carrier material. The carrier material preferably has a surface area of 50 to 250 $m^2/m^3$ when a "fixed film" or filter bed is used; when a fluidised bed or an "air-lift loop" is used, the surface area may be larger, up to 3000 $m^2/m^3$. The biofilm thickness is preferably less than 0.25 mm. In order to obtain thinner biofilms, it may be advantageous to use flocculant sludge rather than granular sludge.

The measures (a), (b) and (c) described above can advantageously be combined, e.g. a high effluent sulphate/sulphite concentration (a) simultaneously with a high salt concentration (b), or a high effluent sulphate/sulphite concentration (a) simultaneously with a high influent sulphide concentration (c), or a high salt concentration (b) simultaneously with a high influent sulphide concentration (c).

Furthermore, the reaction is found to proceed more advantageously if the pH of the anaerobic medium is kept above 7.5.

The anaerobic treatment can preferably be carried out, at least for a portion of the time, at an elevated temperature, in particular at a temperature of 40-100°C. The elevated temperature can be used continuously or virtually continuously, for example when an inexpensive energy source is available, as in the case of hot flue gases and/or a warm wash liquid. In those cases, an electron donor is usually not present in the waste water itself, and an economic use of the added electron donor is then especially important. A suitable elevated temperature is in particular a temperature of 45-70°C, more in particular 50-55°C, The anaerobic treatment can also be carried out at an elevated temperature periodically. A temperature of 60-80°C is particularly suitable for the periodic increase in temperature. The elevated temperature can be maintained for a period of from one hour or a few hours to several days, for example 1 week.

The invention also relates to a process for removing sulphur compounds from water by anaerobic treatment with sulphur- and/or sulphate-reducing bacteria, with the addition of an electron donor, characterised in that the consumption of the electron donor is reduced by d): introducing a halogenated compound having one carbon atom as an inhibitor into the anaerobic treatment medium in an amount of 0.01-20 mg, preferably 0.05-5 mg per litre of the treatment medium, which inhibitor is more toxic to the methane-producing bacteria than to incompletely oxidising sulphate-reducing bacteria or sulphate-reducing bacteria oxidising compounds having one carbon atom, and using a compound without carbon atoms or a compound with one carbon atom such as hydrogen, methane, methanol, formaldehyde, formic acid or carbon monoxide as an electron donor.

Measure (d) relates to the use of an inhibitor, especially for the methane-producing bacteria. Thus, the consumption of the electron donor is reduced by introducing an inhibitor into the anaerobic treatment medium, which inhibitor is more toxic to the methane-producing bacteria than to the incompletely oxidising sulphate-reducing bacteria or the sulphate-reducing bacteria oxidising compounds having one carbon atom.

In the process for removing sulphur compounds from water according to the invention, the water is subjected to anaerobic treatment with bacteria, which usually comprise incompletely oxidising sulphate-reducing bacteria, sulphate-reducing bacteria oxidising compounds having one carbon atom, as well as methane-producing bacteria, In general, the i-SRB secrete acetate when using substrates containing two or more carbon atoms, which acetate can only be degraded by the c-SRB. Therefore, the process according to the invention using inhibitors can be applied more successfully if electron donors are added, which do not produce acetate upon metabolisation by the bacteria. Preferably, a compound without carbon atoms or with only one carbon atom, such as hydrogen, methane, methanol, formaldehyde, formic acid and carbon monoxide, is used as an electron donor.

It has been found that halogenated compounds having one carbon atom are suitable as inhibitors for use in the process according to the invention, chloroform being preferably used as an inhibitor.

As an alternative, monochloromethane, dichloromethane, and tetrachloromethane can also be used as halogenated compounds having one carbon atom. Tetrachloromethane has the property of being converted to chloroform and/or methane compounds having less than three chlorine atoms under the anaerobic conditions of the present process. In addition to chlorinated compounds, brominated and iodinated methane compounds can also be used successfully.

The inhibitor can be used for example in an amount of 0.01-20 mg, preferably 0.05-5 mg per litre of the treating medium. The activity of the inhibitor has an optimum value at a concentration of about 0.1 g/l in the case of chloroform.

Measure d) may be combined with one or more of the measures a), b) and c) discussed above.

Various water effluents can be treated using the process of the invention, for example groundwater, mining effluent, industrial waste water, for example originating from the printing industry, metallurgy, leather, rubber, viscose and fibre industry, paper industry and polymer industry, and wash water of flue gas treatment plants.

The invention also relates to a process for the treatment of sulphur-containing flue gas, in which the flue gas is washed with a wash liquid and the wash liquid is regenerated and the wash liquid is regenerated using the process of the invention described above. In the case of flue gas treatment, the $SO_2$ can be removed from the flue gases using a large scrubber and then fed in dissolved form in the wash water to the anaerobic reactor. The dissolved $SO_2$ is mainly in the form of sulphite and bisulphite. This sulphite and bisulphite are converted to sulphide in the anaerobic biological reactor.

The sulphide formed can then be oxidised to elementary sulphur in a separate reactor. The elementary sulphur can be used as raw material for various applications.

This oxidation is preferably carried out in a second biological reactor. In the second biological reactor oxygen metering is controlled such that the sulphide is mainly oxidised to sulphur and not, or only to a slight extent, to sulphate. The partial oxidation can be effected by, for example, keeping the amount of sludge in the reactor low or by using a short residence time. However, it is preferred to use a deficiency of oxygen. The amount of oxygen can be rapidly and simply adjusted to the requirements of the stream to be treated.

The process according to the invention can be used for a wide variety of sulphur compounds: in the first place, the method is particularly suitable for the removal of inorganic sulphate and sulphite. Further possible compounds are other inorganic sulphur compounds such as thiosulphate, tetrathionate, dithionite, elementary sulphur and the like. Organic sulphur compounds, such as alkanesulphonates, dialkyl sulphides, dialkyl disulphides, mercaptans, sulphones, sulphoxides, carbon disulphide and the like can also be removed from water by the process according to the invention.

The product from the process according to the invention is, if post-oxidation is employed, elementary sulphur, which can be separated off simply from water, for example by settling, filtration, centrifuging or flotation, and can be re-used.

For the post-oxidation of sulphide with sulphide-oxidising bacteria and a deficiency of oxygen, use can be made of the method of Netherlands Patent Application 88.01009. The bacteria which can be used in this case come from the group of colourless sulphur bacteria, such as *Thiobacillus, Thiomicrospira, Sulfolobus and Thermothrix.*

Examples

Table A illustrates the effect of the sulphate concentration on the ethanol consumption for a reactor containing granular sludge grown on waste water from a paper industry and then adapted to ethanol.

## Table A

Effect of the sulphate concentration on the ethanol consumption during sulphate reduction.

| sulphate concentration (mg/l) | kg sulphide/ kg ethanol | mole ethanol/ mole sulphate |
|---|---|---|
| 500 | 1.4 | 1.04 |
| 1400 | 2.2 | 0.65 |

Table B shows the effect of the salt concentration on the consumption of methanol (electron donor) during sulphate reduction using granular sludge grown on waste water and then adapted to methanol (30°C, pH 7.5, residence time 5 hours). It follows that per kg of sulphide produced, only about 25% of the amount of methanol is used by raising the salt concentration. The theoretical maximum is 0.75 mg $S^{2-}$ per kg of methanol.

## Table B

Effect of the salt concentration on the methanol consumption during sulphate reduction.

| salt concentration (g $Na^+$/l) | % methanol consumption for sulphate reduction with respect to total consumption | kg of sulphide production per kg of methanol consumption |
|---|---|---|
| 0.2 | 11 % | 0.09 |
| 12.5 | 50 % | 0.38 |

Table C shows the effect of the salt concentration on the sulphate reduction for a reactor containing granular sludge grown on a mixture of acetate, propionate and butyrate using mesophilic conditions.

## Table C

Effect of the salt concentration, expressed in Na⁺, on the sulphate reduction and methane production.

| salt concentration Na⁺ (g/l) | sulphate reduction % w.r. to maximum | methane production % w.r. to maximum |
|---|---|---|
| 5 | 100 | 100 |
| 7.5 | 100 | 50 |
| 10 | 100 | 25 |
| 12.5 | 100 | 10 |
| 15 | 55 | 5 |

Table D illustrates the effect of sodium concentration on the sulphidogenic and methanogenic activity (% with respect to theoretical maximum) in a thermophilic system (55°C) containing sulphate/sulphite and ethanol.

Table E shows the effect of sodium concentration on the sulphidogenic and methanogenic activity (% with respect to theoretical maximum) in a thermophilic system (55°C) containing sulphate/sulphite and methanol.

### Table D

| sodium concentration (g/l) | sulphide produced (% of maximum) | methane produced (% of theor. maximum) |
|---|---|---|
| 5.0 | 100 | (not determined) |
| 7.5 | 70 | 0 |
| 10.0 | 55 | 0 |
| 12.5 | 50 | 0 |
| 15.0 | 50 | 0 |
| 20.0 | 50 | 0 |

### Table E

| sodium concentration (g/l) | sulphide produced (% of maximum) | methane produced (% of theor. maximum) |
|---|---|---|
| 5.0 | 83 | 88 |
| 7.5 | 100 | 88 |
| 10.0 | 88 | 88 |
| 12.5 | 92 | 88 |
| 15.0 | 75 | not determined |
| 20.0 | 15 | not determined |

Table F shows the effect of biofilm thickness on the sulphate reduction for a reactor containing granular sludge grown on a mixture of acetate and glucose.

Table F

Effect of biofilm thickness on the sulphate reduction and methane production

| Diameter sludge particles (mm) | sulphate reduction (g/g VSS[1].day) | methane production (g/g VSS.day) |
|---|---|---|
| > 2 | < 0.1 | 0.5 |
| 1 - 2 | < 0.1 | 0.6 |
| 0.5 - 1 | 0.12 | 0.55 |
| 0.25 - 0.5 | 0.2 | 0.45 |
| 0.125 - 0.25 | 0.3 | 0.3 |

[1] VSS   Volatile Suspended Solids, the proportion of the suspended material which does not remain in the ashes upon incineration

Table G summarises the inhibition by a number of chlorinated compounds, which cause an inhibition rate of 50 or 80 % respectively of the activity of the MPB, i-SRB and c-SRB. The numerical values indicated refer to the concentration of the relevant inhibitor in mg/l.

Table G

| inhibitor | MPB | | i-SRB | | c-SRB | |
|---|---|---|---|---|---|---|
| | 50% | 80% | 50% | 80% | 50% | 80% |
| p-chlorobenzyl mercaptan | 210 | 375 | 29 | 232 | 46 | 84 |
| p-chlorobenzyl chloride | 14 | 27 | 7 | 16 | 2 | 14 |
| chloroform | 0.90 | 1.48 | 8.0 | >100 | 0.7 | 1.4 |
| chlorobenzene | 350.6 | 470.7 | 85 | 620 | 52 | 176 |
| 1,2-dichlorobenzene | 179.4 | 260.2 | 34 | 118 | 39 | 116 |
| 1,2,3-trichlorobenzene | 94.4 | 119.8 | 58 | 172 | 37 | 88 |
| 2-chlorophenol | 410.2 | 515.7 | 105 | 345 | 78 | 197 |
| 2,4-dichlorophenol | 79.9 | 104.3 | 22 | 51 | 10 | 54 |
| 3-chloro-5-methoxyphenol | 65.0 | 125.3 | 32 | 108 | 21 | 78 |

Table H illustrates the effect of influent sulphide on the sulphide production. An influent sulphide concentration of 400 mg/l, in an anaerobic process carried out at 30°C, at pH 7.5, with an influent sulphate concentration of 1500 mg/l, an influent methanol concentration of 1250 mg/l and a residence time of 5 hours, during 60 days, results in a 40% increase of methanol consumption by the SRB.

## Table H

| Sulphide in influent | Sulphide produced | kg of sulphide produced per kg of methanol consumed |
|---|---|---|
| 0 | 110 mg/l | 0.09 |
| 400 mg/l | 140 mg/l | 0.18 |

Table J shows the anaerobic sulphide producing activity of a batch process carried out at 30°C, at pH 7.5, with an influent sulphate concentration of 1500 mg/l and an influent ethanol concentration of 1250 mg/l, as a function of the initial sulphide concentration.

## Table J

| Initial sulphide conc. (mg/l) | Maximum activity (mg $S^{2-}$/l/day) |
|---|---|
| 0 | 127 |
| 128 | 160 |
| 324 | 243 |
| 753 | 252 |
| 2013 | 0 |

Table K shows the effect of effluent sulphite on the methanol consumption. A sulphite concentration above about 100 mg/l already results in a higher sulphide/methanol efficiency, and above about 300 mg/l the maximum efficiency is reached.

## Table K

| sulphite concentration (mg/l) | kg of sulphide produced per kg of methanol consumed |
|---|---|
| 0 | 0.05 |
| 80 | 0.09 |
| 180 | 0.16 |
| 400 | 0.20 |
| 800 | 0.20 |

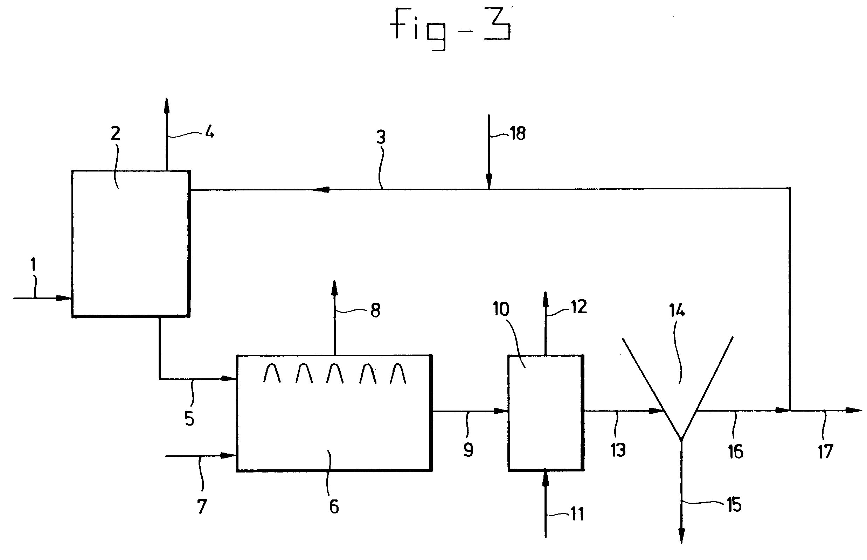

In the case of flue gas treatment, the process according to the invention can be carried out in an installation such as is shown diagrammatically in figure 3. According to this figure, the flue gas contaminated with sulphur dioxide is fed via 1 into a scrubber 2. In this scrubber the flue gas is treated in countercurrent with wash water, which is supplied via 3. The treated flue gas is removed via 4 or further treated. The sulphite-containing wash water is fed via line 5 to an anaerobic reactor 6. An electron donor, such as ethanol, is also fed to the anaerobic reactor 6, via 7. The gas formed in the reactor, which is essentially $CO_2$ and to a lesser extent $H_2S$, is removed via 8 to a gas treatment installation (not shown). The anaerobic effluent, the sulphite concentration of which is maintained at between 300 mg and 2 g per l, is fed via 9 to an aerobic or partially aerobic reactor 10, to which air is also supplied, via 11. The excess air is removed via 12. The sulphur-containing effluent is fed via 13 to a settling tank 14, where the sulphur is separated off and is removed via 15. The effluent from the sulphur settling is removed via 16 and can be re-used as wash water. A fraction can be removed via 17 and if necessary replenishing water, which can also contain buffer and nutrients, is supplied at 18.

## Claims

1. Process for removing sulphur compounds from water, in which the water is subjected to anaerobic treatment with sulphur- and/or sulphate-reducing bacteria, with the addition of an electron donor, characterised in that the consumption of the electron donor is reduced by one or more of the following measures:

    a1): keeping the sulphate concentration in the anaerobic effluent at at least 500 mg/l;
    a2): keeping the sulphite concentration in the anaerobic effluent at at least 100 mg/l;
    b): keeping the salt concentration, expressed in sodium ion equivalents, in the anaerobic medium at at least about 6 g/l under mesophilic conditions, or at least 3 g/l under thermophilic conditions;
    c): keeping the sulphide concentration in the anaerobic influent at at least 100 mg/l.

2. Process according to Claim 1, in which a biofilm thickness of the anaerobic bacteria of less than 0.5 mm is maintained, preferably by using a strong turbulence in the medium.

3. Process according to Claim 1 or 2, in which the sulphate concentration in the anaerobic effluent is kept at at least 900 mg/l, and in particular between 1 and 3 g/l.

4. Process according to Claim 1 or 2, in which the sulphite concentration in the anaerobic effluent is kept at at least 300 mg/l, preferably between 0.4 and 2 g/l.

5. Process according to any one of Claims 1-3, in which the salt concentation, expressed in sodium ion equivalents, is kept at at least 7 g/l.

6. Process according to any one of Claims 1-5, in which the conductivity of the water, under mesophilic conditions, is kept at a value of at least 24 mS/cm.

7. Process according to any one of Claims 1-5, in which the conductivity of the water, under thermophilic conditions, is kept at a value of at least 12 mS/cm.

8. Process according to any one of Claims 1-7, in which the influent sulphide concentration is between 200 and 500 mg/l.

9. Process according to any one of Claims 1-8, in which the pH of the anaerobic medium is kept above 7.5.

10. Process according to any one of Claims 1-9, in which methanol, ethanol, an organic acid, glucose, starch or cellulose is used as an electron donor.

11. Process for removing sulphur compounds from water, in which the water is subjected to anaerobic treatment with sulphur- and/or sulphate-reducing bacteria, with the addition of an electron donor, characterised in that the consumption of the electron donor is reduced by d): introducing a halogenated compound having one carbon atom as an inhibitor into the anaerobic treatment medium in an amount of 0.01-20 mg, preferably 0.05-5 mg per litre of the treatment medium, which inhibitor is more toxic to the methane-producing bacteria than to incompletely oxidising sulphate-reducing bacteria or sulphate-reducing bacteria oxidising compounds having one carbon atom, and using a compound without carbon atoms or a compound with one carbon atom such as hydrogen, methane, methanol,

EP 0 642 472 B1

formaldehyde, formic acid or carbon monoxide as an electron donor,

**12.** Process according to Claim 11, in which chloroform is used as an inhibitor.

**13.** Process according to Claim 11 or 12, further comprising at one or more of the measures a1), a2), b) and c) according to one of Claims 1-10.

**14.** Process according to any one of Claims 1-13, in which the treatment is carried out at a temperature of 40-100°C for at least a portion of the time.

**15.** Process according to any one of Claims 1-14, in which the anaerobic treatment is carried in two stages, a high sulphate concentration being maintained in the first stage and sulphate concentration being lowered in the second stage.

**16.** Process according to any one of Claims 1-15, in which a proportion of the anaerobically treated water is recycled.

**17.** Process according to any one of Claims 1-16, in which sulphate is removed from water.

**18.** Process according to any one of Claims 1-16, in which sulphite is removed from water.

**19.** Process according to any one of Claims 1-16, in which thiosulphate is removed from water.

**20.** Process according to any one of Claims 1-19, in which the sulphide formed is essentially oxidised to elementary sulphur and the sulphur formed is removed.

**21.** Process according to Claim 19, in which the sulphide is partially oxidised with sulphide-oxidising bacteria in the presence of a deficiency of oxygen.

**22.** Process for the treatment of sulphur-containing flue gas, in which the flue gas is washed with a wash liquid and the wash liquid is regenerated, characterised in that the wash liquid is regenerated using the method according to one of Claims 1-21.

**Patentansprüche**

**1.** Verfahren zur Entfernung von Schwefelverbindungen aus Wasser, worin das Wasser einer anaeroben Behandlung mit Schwefel- und/oder Sulfat reduzierenden Bakterien unterworfen wird, mit Zugabe eines Elektronen-Donors, dadurch gekennzeichnet, daß der Verbrauch des Elektronen-Donors reduziert wird durch eine oder mehrere der folgenden Maßnahmen, bei denen man

a1): die Sulfatkonzentration in dem anaeroben Abfluß auf mindestens 500 mg/l hält;
a2): die Sulfitkonzentraton in dem anaeroben Abfluß auf mindestens 100 mg/l hält;
b): die Salzkonzentration, ausgedrückt als Natriumionenäquivalente, in dem anaeroben Medium auf mindestens etwa 6 g/l unter mesophilen Bedingungen oder mindestens 3 g/l unter thermophilen Konditionen hält;
c): die Sulfidkonzentration in dem anaeroben Zufluß auf mindestens 100 mg/l hält.

**2.** Verfahren nach Anspruch 1, worin eine Biofilmdicke der anaeroben Bakterien von weniger als 0,5 mm aufrecht erhalten wird, vorzugsweise durch Verwendung einer starken Turbulenz im Medium.

**3.** Verfahren nach Anspruch 1 oder 2, worin die Sulfatkonzentration in dem anaeroben Abfluß auf mindestens 900 mg/l und insbesondere zwischen 1 und 3g/l gehalten wird.

**4.** Verfahren nach Anspruch 1 oder 2, worin die Sulfitkonzentration in dem anaeroben Abfluß auf mindestens 300 mg/l, vorzugsweise zwischen 0,4 und 2 g/l gehalten wird.

**5.** Verfahren nach einem der Ansprüche 1 bis 3, worin die Salzkonzentration, ausgedrückt als Natriumionenäquivalente, auf mindestens 7 g/l gehalten wird.

**6.** Verfahren nach einem der Ansprüche 1 bis 5, worin die Konduktivität des Wassers unter mesophilen Bedingungen auf einen Wert von mindestens 24 mS/cm gehalten wird.

7. Verfahren nach einem der Ansprüche 1 bis 5, worin die Konduktivität des Wassers unter thermophilen Bedingungen auf einen Wert von mindestens 12 mS/cm gehalten wird.

8. Verfahren nach einem der Ansprüche 1 bis 7, worin die Zuflußsulfidkonzentration zwischen 200 und 500 mg/l gehalten wird.

9. Verfahren nach einem der Ansprüche 1 bis 8, worin der pH-Wert des anaeroben Mediums über 7,5 gehalten wird.

10. Verfahren nach einem der Ansprüche 1 bis 9, worin Methanol, Ethanol, eine organische Säure, Glukose, Stärke oder Zellulose als ein Elektronen-Donor verwendet wird.

11. Verfahren zur Entfernung von Schwefelverbindungen aus Wasser, worin das Wasser einer anaeroben Behandlung mit Schwefel- und/oder Sulfat reduzierenden Bakterien unterworfen wird, mit Zugabe eines Elektronen-Donors, dadurch gekennzeichnet, daß der Verbrauch des Elektronen-Donors reduziert wird durch

d): Einführung einer halogenierten Verbindung mit einem Kohlenstoffatom als Inhibitor in das anaerobe Behandlungsmedium in einer Menge von 0,01 - 20 mg, vorzugsweise 0,05 bis 5 mg je Liter des Behandlungsmediums, wobei der Inhibitor gegenüber den Methan produzierenden Bakterien giftiger ist als gegenüber unvollständig oxidierenden Sulfat reduzierenden Bakterien oder Sulfat reduzierenden Bakterien, die Verbindungen mit einem Kohlenstoffatom oxidieren, und Verwendungen einer Verbindung ohne Kohlenstoffatome oder einer Verbindung mit einem Kohlenstoffatom wie Wassestoff, Methan, Methanol, Formaldehyd, Ameisensäure oder Kohlenmonoxyd als einen Elektronen-Donor.

12. Verfahren nach Anspruch 11, worin Chloroform als ein Inhibitor verwendet wird.

13. Verfahren nach Anspruch 11 oder 12, weiter umfassend eine oder mehrere der Maßnahmen a1), a2), b) und c) gemäß einem der Ansprüche 1 bis 10.

14. Verfahren nach einem der Ansprüche 1 bis 13, worin die Behandlung durchgeführt wird bei einer Temperatur von 40 bis 100°C während mindestens einem Teil der Zeit.

15. Verfahren nach einem der Ansprüche 1 bis 14, worin die anaerobe Behandlung in zwei Stufen durchgeführt wird, wobei eine hohe Sulfatkonzentration in der ersten Stufe beibehalten wird und die Sulfatkonzentration in der zweiten Stufe verringert wird.

16. Verfahren nach einem der Ansprüche 1 bis 15, worin ein Teil des anaerobisch behandelten Wassers recycled wird.

17. Verfahren nach einem der Ansprüche 1 bis 16, worin Sulfat aus dem Wasser entfernt wird.

18. Verfahren nach einem der Ansprüche 1 bis 16, worin Sulfit aus dem Wasser entfernt wird.

19. Verfahren nach einem der Ansprüche 1 bis 16, worin Thiosulfat aus dem Wasser entfernt wird.

20. Verfahren nach einem der Ansprüche 1 bis 19, worin das gebildete Sulfid im wesentlichen zu elementarem Schwefel oxidiert wird und der gebildete Schwefel entfernt wird.

21. Verfahren nach Anspruch 19, worin das Sulfid teilweise mit Sulfid oxidierenden Bakterien in Gegenwart eines Mangels an Sauerstoff oxidiert wird.

22. Verfahren zur Behandlung von schwefelhaltigem Abgas, worin das Abgas mit einer Waschflüssigkeit gewaschen wird und die Waschflüssigkeit regeneriert wird, dadurch gekennzeichnet, daß die Waschflüssigkeit unter Anwendung des Verfahrens gemäß einem der Ansprüche 1 bis 21 regeneriert wird.

**Revendications**

1. Procédé pour éliminer des composés soufrés présents dans l'eau, dans lequel l'eau est soumise à un traitement anaérobie mettant en oeuvre des bactéries réductrices de soufre et/ou de sulfate, en ajoutant un donneur d'électrons, caractérisé en ce que la consommation du donneur d'électrons est réduite par une ou plusieurs des dispositions suivantes :

> a1) : maintien de la concentration en sulfate dans l'effluent anaérobie à au moins 500 mg/l ;
> a2) : maintien de la concentration en sulfite dans l'effluent anaérobie à au moins 100 mg/l ;
> b) : maintien de la concentration saline, exprimée en équivalents d'ions sodium, dans le milieu anaérobie à au moins 6g/l environ dans des conditions mésophiliques ou à au moins 3 g/l dans des conditions thermophiliques ;
> c) : maintien de la concentration en sulfure dans l'affluent anaérobie à au moins 100 mg/l.

2. Procédé selon la revendication 1, dans lequel on maintient une épaisseur du biofilm de bactéries anaérobies inférieure à 0,5 mm, de préférence en utilisant une forte turbulence dans le milieu.

3. Procédé selon la revendication 1 ou 2, dans lequel la concentration en sulfate dans l'effluent anaérobie est maintenue à au moins 900 mg/l, et en particulier entre 1 et 3g/l.

4. Procédé selon la revendication 1 ou 2, dans lequel la concentration en sulfite dans l'effluent anaérobie est maintenue à au moins 300 mg/l, de préférence entre 0,4 et 2 g/l.

5. Procédé selon l'une quelconque des revendications 1 à 3, dans lequel la concentration saline, exprimée en équivalents d'ions sodium, est maintenue à au moins 7 g/l.

6. Procédé selon l'une quelconque des revendications 1 à 5, dans lequel la conductivité de l'eau, dans des conditions mésophiliques, est maintenue à une valeur d'au moins 24 mS/cm.

7. Procédé selon l'une quelconque des revendications 1 à 5, dans lequel la conductivité de l'eau, dans des conditions thermophiliques, est maintenue à une valeur d'au moins 12 mS/cm.

8. Procédé selon l'une quelconque des revendications 1 à 7, dans lequel la concentration en sulfure de l'affluent se situe entre 200 et 500 mg/l.

9. Procédé selon l'une quelconque des revendications 1 à 8, dans lequel le pH du milieu anaérobie est maintenu au-dessus de 7,5.

10. Procédé selon l'une quelconque des revendications 1 à 9, dans lequel est utilisé comme donneur d'électrons du méthanol, de l'éthanol, un acide organique, du glucose, de l'amidon ou de la cellulose.

11. Procédé pour éliminer des composés soufrés présents dans l'eau, dans lequel l'eau est soumise à un traitement anaérobie mettant en oeuvre des bactéries réductrices de soufre et/ou de sulfate, en ajoutant un donneur d'électrons, caractérisé en ce que la consommation du donneur d'électrons est réduite en :

> d) : introduisant dans le milieu de traitement anaérohie un composé halogéné présentant un atome de carbone agissant comme inhibiteur dans une quantité de 0,01-20 mg, de préférence de 0,05-5 mg par litre de milieu de traitement, cet inhibiteur étant plus toxique pour les bactéries générant du méthane que pour les bactéries réductrices de sulfate par oxydation incomplète ou les bactéries réductrices de sulfate par oxydation des composés comportant un atome de carbone, et en utilisant comme donneur d'électrons un composé sans atomes de carbone ou un composé comportant un atome de carbone tel que l'hydrogène, le méthane, le méthanol, le formaldéhyde, l'acide formique et le monoxyde de carbone.

12. Procédé selon la revendication 11, dans lequel on utilise comme inhibiteur du chloroforme.

13. Procédé selon la revendication 11 ou 12, comprenant de plus une ou plusieurs des dispositions a1), a2), b) et c) selon l'une quelconque des revendications 1 à 10.

14. Procédé selon l'une quelconque des revendications 1 à 13, dans lequel le traitement est effectué à une température de 40 à 100°C durant au moins une fraction de la durée totale.

**15.** Procédé selon l'une quelconque des revendications 1 à 14, dans lequel le traitement anaérobie est effectué en deux étapes, en maintenant une concentration élevée en sulfate durant la première étape et en réduisant la concentration en sulfate durant la deuxième étape.

**16.** Procédé selon l'une quelconque des revendications 1 à 15, dans lequel une certaine proportion de l'eau traitée de façon anaérobie est recyclée.

**17.** Procédé selon l'une quelconque des revendications 1 à 16, dans lequel on élimine du sulfate présent dans l'eau.

**18.** Procédé selon l'une quelconque des revendications 1 à 16, dans lequel on élimine du sulfite présent dans l'eau.

**19.** Procédé selon l'une quelconque des revendications 1 à 16, dans lequel on élimine du thiosulfate présent dans l'eau.

**20.** Procédé selon l'une quelconque des revendications 1 à 19, dans lequel le sulfure formé est essentiellement oxydé en soufre élémentaire et dans lequel le soufre formé est éliminé.

**21.** Procédé selon la revendication 19, dans lequel le sulfure est partiellement oxydé par des bactéries oxydant le sulfure dans une ambiance de manque d'oxygène.

**22.** Procédé pour le traitement de gaz de combustion contenant du soufre, dans lequel le gaz de combustion est lavé dans un liquide de lavage qui est régénéré, caractérisé en ce que le liquide de lavage est régénéré en utilisant la méthode selon l'une quelconque des revendications 1 à 21.

# Fig - 1

# Fig - 2

Fig-3